# EUROPÄISCHE PATENTSCHRIFT

(11) **EP 3 123 047 B1**
(45) Veröffentlichungstag und Bekanntmachung des Hinweises auf die Patenterteilung: **14.11.2018**
(21) Anmeldenummer: 15720198.9
(22) Anmeldetag: 26.03.2015
(51) Int. Cl.: F16D 13/70, F16D 21/06

(54) **DOPPELKUPPLUNG**
DUAL CLUTCH
DOUBLE EMBRAYAGE

(30) Priorität: 27.03.2014 DE 102014205773
(43) Veröffentlichungstag der Anmeldung: 01.02.2017
(73) Patentinhaber: Schaeffler Technologies AG & Co. KG, 91074 Herzogenaurach (DE)
(72) Erfinder: BAUMANN, Michael, 77886 Lauf (DE); REIMNITZ, Dirk, 77815 Bühl (DE)
(86) Internationale Anmeldenummer: PCT/DE2015/200201
(87) Internationale Veröffentlichungsnummer: WO 2015/144172

(56) Entgegenhaltungen:
- EP-B1- 1 524 446
- WO-A1-2014/012543
- DE-A1-102013 200 408

## Beschreibung

Die Erfindung betrifft eine Doppelkupplung, mit deren Hilfe einer Antriebswelle eines Kraftfahrzeugmotors mit einer ersten Getriebeeingangswelle und/oder einer zweiten Getriebeeingangswelle eines Kraftfahrzeuggetriebes gekoppelt werden kann.

Beispielsweise aus DE102011014933 A1 ist eine direkt betätigte Doppelkupplung bekannt, bei der zwei Teilkupplungen mit Hilfe jeweils eines von einem Betätigungssystem axial verlagerbaren im Wesentlichen starren Betätigungstopf geschlossen und geöffnet werden können, um zwischen jeweils einer Gegenplatte und einer relativ zur Gegenplatte von dem zugeordneten Betätigungstopf axial verlagerbaren Anpressplatte eine mit einer jeweiligen Getriebeeingangswelle drehfest verbundene Kupplungsscheibe reibschlüssig zu verpressen.

Eine weitere gattungsgemäße Doppelkupplung ist in der EP1524446B1 beschrieben. Es wird über ein Betätigungsorgan in der Art von Kolben-Zylinderanordnungen in Verbindung mit Ausrück- bzw. Einrücklagern jeweils einen Drucktopf betätigt. Die Doppelkupplung weist dabei zwei Reibscheiben auf, die jeweils auf einer Getriebeeingangswelle angeordnet sind. Über den Drucktopf wird dabei jeweils eine Anpresskraft zum Einrücken der jeweiligen Teilkupplung ausgeübt. Die Drucktöpfe sind jeweils über Einrücklager an das jeweilige Kolben-Zylindersystem angeschlossen.

Aus der DE 10 2013 200 408 A1 und der WO 2014/012543 A1 sind jeweils Doppelkupplungsanordnungen, insbesondere nasse Doppelkupplungen bekannt, bei denen Mehrscheibenteilkupplungen mittels übersetzungslose Drucktöpfe betätigt werden.

Andere bekannte Kupplungen sind hebelfederbetätigte trockene Doppelkupplung, einfache 2-Scheiben selbstnachstellende Kupplungen für den Verschließausgleich im Handschalterbereich und nasslaufende Kupplungen (sowohl Doppel-, als auch Einfachkupplungen.

Es besteht ein ständiges Bedürfnis die Effizienz und die Zuverlässigkeit eines Systems zur Drehmomentübertragung, insbesondere einer Doppelkupplung, zu erhöhen.

Es ist die Aufgabe der Erfindung Maßnahmen aufzuzeigen, die eine zuverlässige und hocheffiziente Doppelkupplung zur Drehmomentübertragung ermöglichen.

Die Lösung der Aufgabe erfolgt erfindungsgemäß durch eine Doppelkupplung mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist eine Doppelkupplung zum Kuppeln einer Antriebswelle eines Kraftfahrzeugmotors mit einer ersten Getriebeeingangswelle und/oder einer zweiten Getriebeeingangswelle eines Kraftfahrzeuggetriebes vorgesehen mit einer ersten Teilkupplung zum Kuppeln der Antriebswelle mit der ersten Getriebeeingangswelle, wobei die erste Teilkupplung eine erste Gegenplatte, mindestens eine relativ zur ersten Gegenplatte axial verlagerbare erste Zwischenplatte und eine relativ zur ersten Gegenplatte und zur ersten Zwischenplatte axial verlagerbare erste Anpressplatte zum Verpressen von ersten Reibbelägen einer ersten Kupplungsscheibe zwischen der ersten Gegenplatte und der ersten Zwischenplatte sowie zwischen der der ersten Zwischenplatte und der ersten Anpressplatte aufweist, einer zweiten Teilkupplung zum Kuppeln der Antriebswelle mit der zweiten Getriebeeingangswelle, wobei die zweite Teilkupplung eine zweite Gegenplatte, mindestens eine relativ zur zweiten Gegenplatte axial verlagerbare zweite Zwischenplatte und eine relativ zur zweiten Gegenplatte und zur zweiten Zwischenplatte axial verlagerbare zweite Anpressplatte zum Verpressen von zweiten Reibbelägen einer zweiten Kupplungsscheibe zwischen der zweiten Gegenplatte und der zweiten Zwischenplatte sowie zwischen der der zweiten Zwischenplatte und der zweiten Anpressplatte aufweist, einem ersten Betätigungstopf zum übersetzungslosen Verlagern der ersten Anpressplatte und einem zweiten Betätigungstopf zum übersetzungslosen Verlagern der zweiten Anpressplatte.

Die jeweiligen Teilkupplungen werden dementsprechend direkt ohne Hebelübersetzung betätigt.

Mit Hilfe der jeweiligen Zwischenplatte ist es möglich zwei weitere Reibflächen zum Verpressen von Reibbelägen der zugeordneten Kupplungsscheibe bereitzustellen, so dass sich mit der Zwischenplatte die Anzahl der Reibflächen der jeweiligen Teilkupplung entsprechend erhöhen lässt. Durch die erhöhte Anzahl der Reibflächen kann ein entsprechend erhöhtes Drehmoment übertragen werden. Zusätzlich oder alternativ kann die auf die jeweilige Anpressplatte aufzubringende Anpresskraft reduziert werden, um ein bestimmtes maximales Drehmoment noch übertragen zu können. Zusätzlich oder alternativ kann der Außenradius der Gegenplatte und/oder der Anpressplatte verringert werden, um ein bestimmtes maximales Drehmoment noch übertragen zu können. Durch den geringeren Außenradius kann das Massenträgheitsmoment der jeweiligen Teilkupplung reduziert werden und radial Bauraum eingespart werden. Durch das reduzierte Massenträgheitsmoment eignet sich die Doppelkupplung insbesondere für Anwendungen mit einem sportlichen und/oder dynamischen Fahrverhalten und/oder zur Reduzierung eines Kraftstoffverbrauchs eines Kraftfahrzeugs. Gleichzeitig kann die Anpresskraft über den jeweils zugeordnete, insbesondere in der Art eines starren Drucktopfs ausgestalteten, Betätigungstopf in die Anpressplatte eingeleitet werden. Dadurch ergibt sich zwischen einem, insbesondere hydraulischen, Betätigungssystem zur Bereitstellung einer Betätigungskraft und der an dem Reibbelag der Kupplungsscheibe angreifenden Anpresskraft ohne Kraftübersetzung, wodurch eine Betätigungsbewegung des Betätigungssystems über die Betätigungstöpfe im Wesentlichen ohne Verstärkung und/oder ohne Verlust auf die Anpressplatten übertragen werden kann. Zusätzlich ermöglicht der starre Betätigungstopf in Vergleich zu einer elastischen Hebelfeder eine erhöhte konstruktive Festigkeit und Stabilität der Kupplung, wodurch ein Bauteilverschleiß aufgrund der Unstabilität vermieden werden kann. Demzufolge kann die Lebensdauer der Kupplung verlängert werden.

Die Betätigungskraft kann von einem hydraulischen Betätigungssystem aufgebracht werden, das insbesondere einen ersten Ringzylinder zum Verlagern des ersten Betätigungstopfs mit Hilfe eines in dem ersten Ringzylinder axial geführten ersten Betätigungskolbens und einen konzentrisch zum ersten Ringzylinder vorgesehenen zweiten Ringzylinder zum Verlagern des zweiten Betätigungstopfs mit Hilfe eines in dem zweiten Ringzylinder axial geführten zweiten Betätigungskolbens aufweist. Zwischen dem ersten Betätigungskolben und dem ersten Betätigungstopf kann ein erstes Ausrücklager und zwischen dem zweiten Betätigungskolben und dem zweiten Betätigungstopf ein zweites Ausrücklager angeordnet sein.

Die jeweilige Kupplungsscheibe kann insbesondere an voneinander wegweisenden axialen Stirnflächen einer Belagfederung jeweils einen Reibbelag aufweisen, der mit einem gegebenenfalls vorgesehenen Reibbelag der zugehörigen Gegenplatte und/oder Anpressplatte und/oder Zwischenplatte reibschlüssig in Kontakt kommen kann, um die jeweilige Kupplung zu schließen. Die zwischen der Gegenplatte und der Zwischenplatte vorgesehenen Reibbeläge können in axialer Richtung relativ zueinander bewegt werden. Auf die gleiche Weise können die zwischen der Zwischenplatte und der Anpressplatte vorgesehenen Reibbeläge ebenfalls in axialer Richtung relativ zueinander bewegbar sein. Es ist möglich, dass einer der beiden entgegengesetzten Reibbeläge in axialer Richtung unbeweglich und der andere Reibbelag in axialer Richtung verschiebbar an der Kupplungsscheibe angebunden ist. Die jeweilige Kupplungsscheibe kann über eine Verzahnung mit der jeweiligen Getriebeeingangswelle drehfest, aber axial beweglich verbunden sein. Die Doppelkupplung kann insbesondere mit einem motorseitig vorgelagerten und/oder getriebeseitig nachgelagerten Drehschwingungsdämpfer, insbesondere Zweimassenschwungrad und/oder Fliehkraftpendel und/oder Massependel, direkt oder indirekt verbunden sein. Ferner kann die jeweilige Kupplungsscheibe insbesondere mit Hilfe eines Scheibendämpfers gedämpft sein. Die Doppelkupplung kann insbesondere über eine starre Scheibe ("Driveplate") und/oder eine biegbare und/oder in axialer Richtung flexible Scheibe ("Flexplate") mit der Antriebswelle verbunden sein, wobei die Scheibe Drehmomente übertragen kann, um in die Doppelkupplung das Drehmoment der Antriebswelle einleiten zu können. Durch die flexible Ausgestaltung der Scheibe können auftretende Schwingungen ganz oder teilweise gedämpft oder getilgt werden. Zusätzlich oder alternativ kann die Doppelkupplung über mindestens ein Federelement, insbesondere Blattfeder, mit der Antriebswelle verbunden sein. Das Federelement kann insbesondere Axialschwingung dämpfen und/oder ein Taumeln der Antriebswelle ausgleichen und dabei gleichzeitig ein Drehmoment übertragen.

Die erste Gegenplatte und die zweite Gegenplatte können als voneinander verschiedene separate Bauteile ausgestaltet sein oder durch eine gemeinsame Zentralplatte ausgebildet sein. Insbesondere ist genau eine erste Zwischenplatte oder es sind genau zwei erste Zwischenplatten oder genau drei erste Zwischenplatten vorgesehen. Vorzugsweise ist genau eine zweite Zwischenplatte oder es sind genau zwei zweite Zwischenplatten oder genau drei zweite Zwischenplatten vorgesehen. Bei jeweils einer Zwischenplatten und einer Zentralplatte ergibt sich eine Doppelkupplung nach dem "fünf-Platten-Design". Bei jeweils einer Zwischenplatten und getrennt vorgesehenen Gegenplatten ergibt sich eine Doppelkupplung nach dem "sechs-Platten-Design". Bei jeweils zwei Zwischenplatten und einer Zentralplatte ergibt sich eine Doppelkupplung nach dem "sieben-Platten-Design". Bei jeweils zwei Zwischenplatten und getrennt vorgesehenen Gegenplatten ergibt sich eine Doppelkupplung nach dem "acht-Platten-Design". Vorzugsweise sind die erste Getriebeeingangswelle und die zweite Getriebeeingangswelle koaxial zueinander angeordnet. Insbesondere ist die innere Getriebeeingangswelle, insbesondere die erste Getriebeeingangswelle, an der Antriebswelle gelagert. Vorzugsweise weist die Antriebswelle an einer axialen Stirnseite eine Vertiefung auf, in welche die innere Getriebeeingangswelle teilweise hineinragt und beispielsweise über ein Pilotlager an der Antriebswelle gelagert sein kann.

Insbesondere ist vorgesehen, dass die drehfest mit der ersten Getriebeeingangswelle verbindbare erste Kupplungsscheibe vorgesehen ist, wobei die erste Kupplungsscheibe einen für den ersten Reibbelag zwischen der ersten Gegenplatte und der ersten Zwischenplatte sowie für den ersten Reibbelag zwischen der ersten Zwischenplatte und der ersten Anpressplatte gemeinsamen, insbesondere als Scheibendämpfer ausgestalteten, ersten Drehschwingungsdämpfer aufweist, und/oder die drehfest mit der zweiten Getriebeeingangswelle verbindbare zweite Kupplungsscheibe vorgesehen ist, wobei die zweite Kupplungsscheibe einen für den zweiten Reibbelag zwischen der zweiten Gegenplatte und der zweiten Zwischenplatte sowie für den zweiten Reibbelag zwischen der zweiten Zwischenplatte und der zweiten An- pressplatte gemeinsamen, insbesondere als Scheibendämpfer ausgestalteten, zweiten Drehschwingungsdämpfer aufweist. Dadurch ist jeweils ein Drehschwingungsdämpfer ausreichend sämtliche Reibbeläge der jeweiligen Kupplungsscheibe zu dämpfen und Drehschwingungen zumindest teilweise zu dämpfen und/oder zu tilgen. Insbesondere ist es möglich die Doppelkupplung ohne zwischengeschalteten Drehschwingungsdämpfer mit der Antriebswelle zu verbinden. Beispielsweise ist lediglich ein starres Schwungrad mit der Antriebswelle drehfest verbunden, wobei die erste Gegenplatte und/oder die zweite Gegenplatte direkt oder indirekt mit dem Schwungrad drehfest verbunden sind. Vorzugsweise ist die erste Gegenplatte direkt mit der Antriebswelle verbunden.

In vorteilhafter Weiterbildung der Erfindung ist vorgesehen, dass ein mit der ersten Gegenplatte und der zweiten Gegenplatte drehfest verbundener Kupplungsdeckel zum Abdecken zumindest eines Teils der ersten Teilkupplung und/oder der zweiten Teilkupplung vorgesehen sein kann, wobei der Kupplungsdeckel an einer Befestigungsstelle mit der ersten Gegenplatte und/oder mit der zweiten Gegenplatte befestigt sein kann. Der Kupplungsdeckel kann außer seiner Abdeckungsfunktion vorzugsweise eine Tragfähigkeit aufweisen. Beispielsweise kann ein Betätigungssystem oder eine Nachstelleinrichtung an dem Kupplungsdeckel befestigt werden.

Besonders bevorzugt ist ein, insbesondere hydraulisches, mechanisches und/oder elektromechanisches, Betätigungssystem zur Aufbringung einer an dem ersten Betätigungstopf und/oder an dem zweiten Betätigungstopf angreifenden Betätigungskraft vorgesehen, wobei das Betätigungssystem an mindestens einem Kupplungsteil, insbesondere an der ersten Getriebeeingangswelle, an der zweiten Getriebeeingangswelle, an einem Getriebegehäuse und/oder an dem Kupplungsdeckel, zur Abtragung von Lasten gelagert ist. Das Betätigungssystem braucht dadurch nicht über separate Befestigungsmittel, beispielsweise Schrauben, mit einem Getriebegehäuse befestigt werden, wodurch die Montage vereinfacht ist. Beispielsweise ist das Betätigungssystem lediglich über einen in tangentialer Richtung wirkenden Anschlag an dem Getriebegehäuse zur Drehmomentabstützung abgestützt, um ein ungewolltes Verdrehen des Betätigungssystems zu verhindern. Insbesondere ist die zweite Getriebeeingangswelle als Hohlwelle ausgestaltet, wobei die erste Getriebeeingangswelle koaxial zur zweiten Getriebeeingangswelle innerhalb der zweiten Getriebeeingangswelle angeordnet ist. Vorzugsweise stützt sich das Betätigungssystem an der radial äußeren zweiten Getriebeeingangswelle ab.

Insbesondere kann ein Federelement, insbesondere eine in axialer Richtung flexible Flexplate oder Blattfedern, zur drehfesten Befestigung mit der Antriebswelle vorgesehen sein, wobei die Flexplate mit der ersten Gegenplatte und/oder mit der zweiten Gegenplatte zur Einleitung eines von der Antriebswelle bereitgestellten Drehmoments verbunden ist. Durch die Flexibilität der Flexplate in axialer Richtung können insbesondere Axialschwingung gedämpft und/oder ein Taumeln der Antriebswelle ausgeglichen werden. Gleichzeitig kann die Flexplate das Drehmoment der Antriebswelle an die erste Gegenplatte und/oder die zweite Gegenplatte übertragen.

Vorzugsweise kann ein Stützanschlag zur Abstützung von in axialer Richtung wirkenden Betätigungskräften in die Antriebswelle vorgesehen sein, wobei insbesondere die erste Gegenplatte relativ zur Antriebswelle axial bewegbar und/oder kippbar ist und der Stützanschlag durch die Antriebswelle und/oder durch die erste Gegenplatte und/oder ein mit der Antriebswelle oder mit der ersten Gegenplatte verbundenes Bauteil ausgebildet ist. Der Stützanschlag erlaubt es Axialkräfte, die insbesondere von einem Betätigungssystem aufgebracht werden, abzutragen. Gleichzeitig kann das an dem Stützanschlag anschlagende Bauteil, insbesondere die erste Gegenplatte und/oder die zweite Gegenplatte, von dem Stützanschlag abheben und/oder auf dem Stützanschlag verkippen, um Axialschwingungen dämpfen zu können und/oder Taumelbewegungen der Antriebswelle auszugleichen. Der Stützanschlag kann insbesondere auf einem kleinen Radius angeordnet sein, so dass der Stützanschlag beispielsweise radial innerhalb einer Befestigung der Doppelkupplung mit der Antriebswelle angeordnet sein kann.

Besonders bevorzugt können die erste Gegenplatte und die zweite Gegenplatte durch eine gemeinsame Zentralplatte ausgebildet sein. Dadurch kann insbesondere die Bauteileanzahl und/oder der axiale Bauraumbedarf reduziert werden.

Erfindungsgemäß ist die erste Gegenplatte und/oder die zweite Gegenplatte über ein Stützlager zur Abtragung von Radialkräften und/oder Axialkräften an der ersten Getriebeeingangswelle und/oder der zweiten Getriebeeingangswelle abgestützt sein. Mit Hilfe von dem Stützlager können die an den Gegenplatten wirkenden Kräfte über die erste Getriebeeingangswelle und/oder die zweite Getriebeeingangswelle abgetragen werden, wodurch insbesondere Belastungen der Antriebswelle vermieden werden können.

Vorteilhaft kann die erste Gegenplatte und/oder die zweite Gegenplatte über einen radial wirkenden Gleitversatzausgleich an dem Stützlager angebunden sein. Die Hauptfunktion des Gleitversatzausgleichs besteht darin, eine radiale Verspannung der Antriebwelle und der Getriebeeingangswellen durch die Kupplung zu verhindern, wenn die Kupplung an nicht ganz koaxial ausgerichteten Wellen montiert wird. Der radial wirkende Gleitversatzausgleich kann beispielsweise ein Axialgleitlager aufweisen, das in einer Richtung wirkende Axialkräfte, insbesondere von einem Betätigungssystem aufgebrachte Betätigungskräfte, abtragen kann aber gleichzeitig ein, insbesondere begrenztes, Abheben in die andere Axialrichtung zulässt. Dadurch können Axialschwingungen gedämpft und/oder Taumelbewegungen der Antriebswelle ausgeglichen werden. Der radial wirkende Gleitversatzausgleich ist insbesondere vorgesehen, wenn die Doppelkupplung über ein in axialer Richtung flexibles Element, beispielsweise eine Flexplate oder im Wesentlichen tangential ausgerichtete Blattfedern, an der Antriebswelle angebunden ist.

Vorzugsweise kann ein mit der ersten Gegenplatte und/oder der zweiten Gegenplatte verbundener, insbesondere als Zweimassenschwungrad ausgestalteter, Drehschwingungsdämpfer zur Dämpfung von über die Antriebswelle eingeleitete Drehschwingungen vorgesehen sein, wobei der Drehschwingungsdämpfer mindestens eine Zugangsöffnung zum Hindurchführen eines den Drehschwingungsdämpfer mit der ersten Gegenplatte und/oder mit der zweiten Gegenplatte verbindenden Befestigungsmittels aufweist und/oder die erste Gegenplatte und/oder die zweite Gegenplatte eine Montageöffnung zum Hindurchführen eines den Drehschwingungsdämpfer mit der Antriebswelle verbindenden Verbindungsmittels aufweist und/oder die erste Kupplungsscheibe und/oder die zweite Kupplungsscheibe und/oder der erste Betätigungstopf und/oder der zweite Betätigungstopf eine Montageöffnung zum Hindurchführen eines den Drehschwingungsdämpfer mit der Antriebswelle verbindenden Verbindungsmittels aufweist. Der Drehschwingungsdämpfer kann mit der Antriebswelle vormontiert sein. Nach der Montage der Doppelkupplung kann dann der Drehschwingungsdämpfer mit der ersten Gegenplatte und/oder der zweiten Gegenplatte direkt oder indirekt verbunden werden, indem das Befestigungsmittel durch die Zugangsöffnung hindurchgeführt wird. Zusätzlich oder alternativ kann das mindestens eine Befestigungsmittel radial außen an der Doppelkupplung angeordnet sein. Alternativ kann der Drehschwingungsdämpfer mit der übrigen Doppelkupplung vormontiert sein, wobei zur Verbindung der Doppelkupplung mit der Antriebswelle die Verbindungsmittel durch die korrespondierenden Montageöffnungen hindurchgeführt werden.

Besonders bevorzugt kann die erste Gegenplatte zur Abtragung von Radialkräften und/oder Axialkräften an der Antriebswelle und/oder einem mit der Antriebswelle verbundenen, insbesondere als Zweimassenschwungrad ausgestalteten, Drehschwingungsdämpfer zur Dämpfung von über die Antriebswelle eingeleitete Drehschwingungen abgestützt sein. Aufgrund der vergleichsweise geringen auftretenden Kräfte in der Doppelkupplung können diese Kräfte über die Antriebswelle abgetragen werden. Hierbei kann sich die erste Gegenplatte direkt oder indirekt über den Drehschwingungsdämpfer an der Antriebswelle abstützen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht einer Doppelkupplung in einer ersten Ausführungsform,
- Fig. 2:: eine schematische Schnittansicht einer Doppelkupplung in einer zweiten Ausführungsform,
- Fig. 3:: eine schematische Schnittansicht einer Doppelkupplung in einer dritten Ausführungsform,
- Fig. 4:: eine schematische Schnittansicht einer Doppelkupplung in einer vierten Ausführungsform,
- Fig. 5:: eine schematische Schnittansicht einer Doppelkupplung in einer fünften Ausführungsform,
- Fig. 6:: eine schematische Schnittansicht einer Doppelkupplung in einer sechsten Ausführungsform,
- Fig. 7:: eine schematische Schnittansicht einer Doppelkupplung in einer siebten Ausführungsform,
- Fig. 8:: eine schematische Schnittansicht einer Doppelkupplung in einer achten Ausführungsform,
- Fig. 9:: eine schematische Schnittansicht einer Doppelkupplung in einer neunten Ausführungsform,
- Fig. 10:: eine schematische Schnittansicht einer Doppelkupplung in einer zehnten Ausführungsform,
- Fig. 11:: eine schematische Schnittansicht einer Doppelkupplung in einer elften Ausführungsform,
- Fig. 12:: eine schematische Schnittansicht einer Doppelkupplung in einer zwölften Ausführungsform,
- Fig. 13:: eine schematische Schnittansicht einer Doppelkupplung in einer dreizehnten Ausführungsform und
- Fig. 14:: eine schematische Schnittansicht einer Doppelkupplung in einer vierzehnten Ausführungsform.

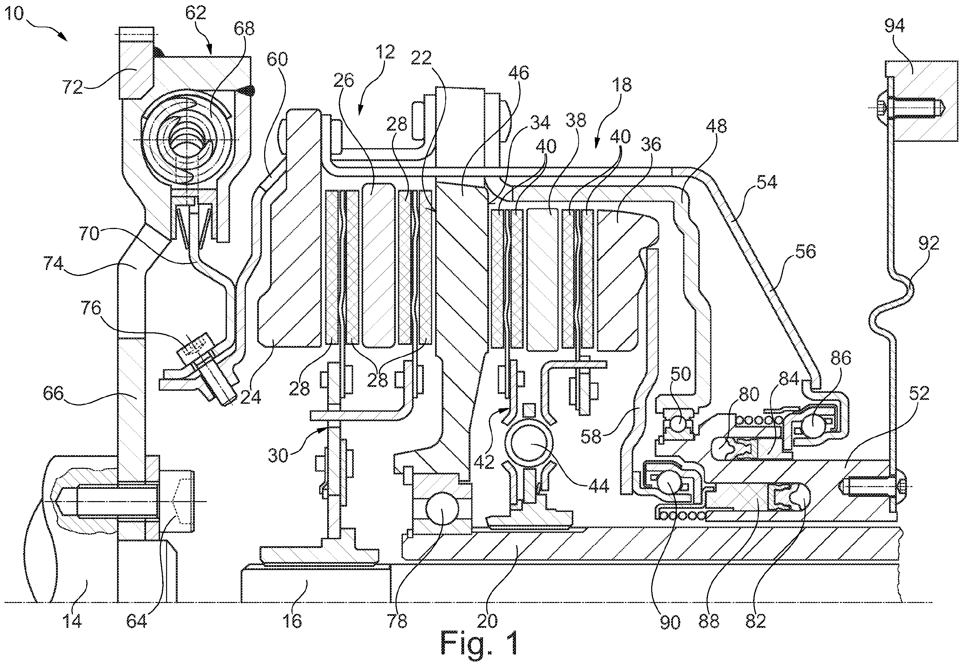

Die in Fig. 1 dargestellte Doppelkupplung 10 weist eine erste Teilkupplung 12 zum Kuppeln einer Antriebswelle 14 mit einer ersten Getriebeeingangswelle 16 und eine zweite Teilkupplung 18 zum Kuppeln der Antriebswelle 14 mit einer konzentrisch zur ersten Getriebeeingangswelle 16 angeordneten zweiten Getriebeeingangswelle 20 auf. Die erste Teilkupplung 12 weist eine erste Gegenplatte 22 und eine relativ zur ersten Gegenplatte 22 axial verlagerbare erste Anpressplatte 24 auf. Zwischen der ersten Gegenplatte 22 und der ersten Anpressplatte 24 ist eine axial verlagerbare erste Zwischenplatte 26 vorgesehen. Zwischen der ersten Gegenplatte 22 und der ersten Zwischenplatte 26 sowie zwischen der ersten Zwischenplatte 26 und der ersten Anpressplatte 24 sind jeweils axial zueinander verlagerbare erste Reibbeläge 28 einer ersten Kupplungsscheibe 30 vorgesehen. Die erste Kupplungsscheibe 30 ist drehfest mit der ersten Getriebeeingangswelle 16 verbunden. Die zweite Teilkupplung 18 weist eine zweite Gegenplatte 34 und eine relativ zur zweiten Gegenplatte 34 axial verlagerbare zweite Anpressplatte 36 auf. Zwischen der zweiten Gegenplatte 34 und der zweiten Anpressplatte 36 ist eine axial verlagerbare zweite Zwischenplatte 38 vorgesehen. Zwischen der zweiten Anpressplatte 36 und der zweiten Zwischenplatte 38 sowie zwischen der zweiten Zwischenplatte 38 und der zweiten Gegenplatte 34 sind jeweils axial zueinander verlagerbare zweite Reibbeläge 40 einer zweiten Kupplungsscheibe 42 vorgesehen. Die zweite Kupplungsscheibe 42 ist über einen zweiten Scheibendämpfer 44 drehfest mit der zweiten Getriebeeingangswelle 20 verbunden. Im dargestellten Ausführungsbeispiel sind die erste Gegenplatte 22 und die zweite Gegenplatte 34 durch eine gemeinsame Zentralplatte 46 ausgebildet, so dass sich ein "fünf-Platten-Design" ergibt.

Mit der Zentralplatte 46 und damit mit der ersten Gegenplatte 22 und der zweiten Gegenplatte 34 ist ein Kupplungsdeckel 48 verbunden, der über ein Deckellager 50 mit einem Betätigungssystem 52 verbunden ist. Die erste Anpressplatte 24 kann über einen ersten Betätigungstopf 54 von dem Betätigungssystem 52 axial verlagert werden, um für ein Schließen der ersten Teilkupplung 12 die ersten Reibbeläge 28 der ersten Kupplungsscheibe 30 reibschlüssig zu verpressen oder für ein Öffnen der ersten Teilkupplung 12 einen Reibschluss mit den ersten Reibbelägen 28 der ersten Kupplungsscheibe 30 aufzuheben. In diesem Ausführungsbeispiel ist der erste Betätigungstopf 54 als Zugelement 56 ausgebildet. Die zweite Anpressplatte 36 kann über einen zweiten Betätigungstopf 58 von dem Betätigungssystem 52 axial verlagert werden, um für ein Schließen der zweiten Teilkupplung 18 die zweiten Reibbeläge 40 der zweiten Kupplungsscheibe 42 reibschlüssig zu verpressen oder für ein Öffnen der ersten Teilkupplung 18 einen Reibschluss mit den zweiten Reibbelägen 40 der zweiten Kupplungsscheibe 42 aufzuheben. Die Betätigungsrichtungen zum Schließen der ersten Teilkupplung 12 und der zweiten Teilkupplung 18 sind in den entgegengesetzten Axialrichtungen angeordnet. Die beiden Betätigungstöpfe 54, 58 sind im Wesentlichen starr ausgebildet, wodurch Schwenkbewegungen der Betätigungstöpfe 54, 58 vermieden werden kann. Demzufolge kann eine Betätigungsbewegung des Betätigungssystems 52 über die Betätigungstöpfe 54, 58 im Wesentlichen ohne Verstärkung und ohne Verlust auf die Anpressplatten 24, 36 übertragen werden.

Im dargestellten Ausführungsbeispiel ist die Zentralplatte 46 über einen Mitnehmerring 60 und einen als Zweimassenschwungrad ausgestaltetem Drehschwingungsdämpfer 62 mit der Antriebswelle 14 verbunden. Der Drehschwingungsdämpfer 62 weist eine mit der Antriebswelle 14 über ein als Schraube ausgestaltetes Verbindungsmittel 64 verbundene Primärmasse 66 auf, die über ein als Bogenfeder ausgestalteten Energiespeicherelement 68 mit einer als Ausgangsflansch ausgestaltetem Sekundärmasse 70 begrenzt verdrehbar gekoppelt ist. In der Primärmasse 66 ist ein Aufnahmekanal für das Energiespeicherelement 68 ausgebildet, in den die Sekundärmasse 70 von radial innen hineinragt. Ferner ist mit der Primärmasse 66 ein Starterkranz 72 zum Einleiten eines Startmoments zum Starten des Kraftfahrzeugmotors verbunden. In der Primärmasse 66 des Drehschwingungsdämpfers 62 ist eine Zugangsöffnung 74 vorgesehen, durch die ein als Schraube ausgestaltetes Befestigungsmittel 76 hindurchgeführt werden kann, um die Sekundärmasse 70 mit dem Mitnehmerring 60 zu verschrauben.

Durch die feste Verbindung der Zentralplatte 46 mit dem Drehschwingungsdämpfer 62 können in der Doppelkupplung auftretende Kräfte über die Antriebswelle 14 abgetragen werden. Zusätzlich oder alternativ kann die Zentralplatte 46 und damit die erste Gegenplatte 22 und die zweite Gegenplatte 34 über ein Stützlager 78 an der äußeren zweiten Getriebeeingangswelle 20 oder alternativ an der inneren ersten Getriebeeingangswelle 16 zur Abtragung von Axialkräften und/oder Radialkräften abgestützt sein. Zusätzlich oder alternativ kann durch eine axiale Elastizität im Drehschwingungsdämpfer 62 und /oder im Mitnehmerring 60 eine axiale Verspannung vermieden werden, wenn die Doppelkupplung 10 getriebeseitig und der Drehschwingungsdämpfer 62 antriebsseitig befestigt wird.

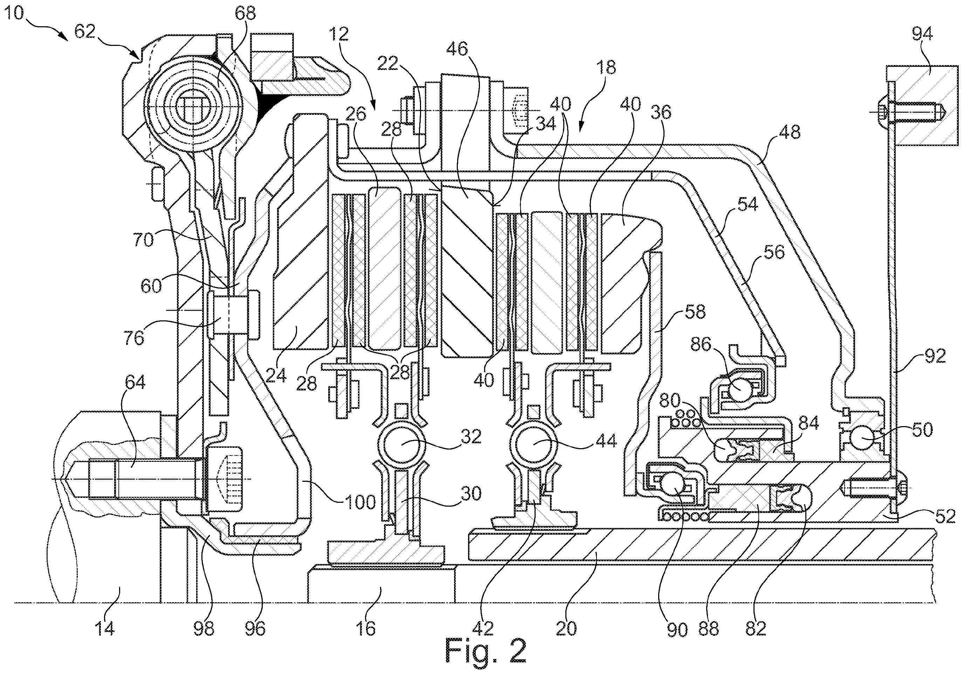

Eine Betätigungskraft zum Verschieben des ersten Betätigungstopfs 54 und/oder des zweiten Betätigungstopfs 58 kann von dem Betätigungssystem 52 aufgebracht werden. In diesem Ausführungsbeispiel weist das Betätigungssystem 52 einen ersten Ringzylinder 80 und einen koaxial zum ersten Ringzylinder 80 angeordneten zweiten Ringzylinder 82 auf. Das Betätigungssystem 52 ist dadurch als CSC ("concentric slave cylinder") ausgestaltet. Die beiden Ringzylinder 80, 82 sind in den entgegengesetzten Richtungen angeordnet. In dem ersten Ringzylinder 80 ist ein erster Betätigungskolben 84 axial geführt, der über ein erstes Ausrücklager 86 an dem ersten Betätigungstopf 54 angreift. Dadurch kann der erste Betätigungstopf 54 von dem Betätigungssystem 52 betätigt werden. In dem zweiten Ringzylinder 82 ist ein zweiter Betätigungskolben 88 axial geführt, der über ein zweites Ausrücklager 90 an dem zweiten Betätigungstopf 58 angreift. Dadurch kann der zweite Betätigungstopf 58 von dem Betätigungssystem 52 betätigt werden. Im dargestellten Ausführungsbeispiel ist das Betätigungssystem 52 über eine Flexplate 92 mit einem Getriebegehäuse 94 verbunden. Die Flexplate 92 dient als Drehmomentabstützung und Verdrehungssicherung für das Betätigungssystem 52 und ist daher in radialer Richtung elastisch ausgeführt. Bei der in Fig. 2 dargestellten Ausführungsform der Doppelkupplung 10 ist im Vergleich zu der in Fig. 1 dargestellten Ausführungsform der Doppelkupplung 10 der Mitnehmerring 60 über ein Gleitlager 96 an der Antriebswelle 14 abgestützt. Das Gleitlager 96 kann axiale und/oder radiale Kräfte abtragen. Hierzu ist ein das Gleitlager 96 tragendes Distanzstück 98 mit Hilfe des vorgesehenen Verbindungsmittels 64 mit der Antriebswelle 14 befestigt. Das die Sekundärmasse 70 mit dem Mitnehmerring 60 verbindende Befestigungsmittel 76 ist als Nietverbindung ausgestaltet, so dass der Drehschwingungsdämpfer 62 mit der übrigen Doppelkupplung 10 vormontiert vorgesehen sein kann. Zusätzlich ist die Zugangsöffnung 74 in der Primärmasse 66 entfallen. Zur Montage der Doppelkupplung 10 mit der Antriebswelle 14 ist deswegen in dem Mitnehmerring eine Montageöffnung 100 vorgesehen, durch die das Verbindungsmittel 64 bei der Montage hindurchgeführt werden kann. Im dargestellten Ausführungsbeispiel sind weder die erste Gegenplatte 22 noch die zweite Gegenplatte 34 auf einer der Getriebeeingangswellen 16, 20 abgestützt. Bei der Montage der Doppelkupplung 10 kann zunächst der Drehschwingungsdämpfer 62 mit der Antriebswelle 14 montiert werden, wobei der Mitnehmerring 60 bereits mit dem Drehschwingungsdämpfer 62 vormontiert ist. Nachfolgend kann die übrige Doppelkupplung 10 mit dem Mitnehmerring 60 verbunden werden. Dazu ist eine Schraubverbindung zwischen dem Mitnehmerring 60 und einer der Gegenplatten 22, 34 vorgesehen. Montageöffnungen 100 in den Kupplungsscheiben 30, 42 und/oder in den Gegenplatten 22, 34 sind in diesem Fall nicht erforderlich. In diesem Ausführungsbeispiel ist nicht nur die zweite Kupplungsscheibe 42 über einen zweiten Scheibendämpfer 44 drehfest mit der zweiten Getriebeeingangswelle 20 verbunden, sondern auch die erste Kupplungsscheibe 30 ist über einen ersten Scheibendämpfer 32 drehfest mit der ersten Getriebeeingangswelle 16 verbunden. Dies ermöglicht, dass auftretende Drehungleichförmigkeiten im über die Antriebswelle 14 eingeleiteten Drehmoment von dem ersten Scheibendämpfer 32 der ersten Kupplungsscheibe 30 und/oder von dem zweiten Scheibendämpfer 44 der zweiten Kupplungsscheibe 42 gedämpft werden können. Drehungleichförmigkeiten können auch im Drehschwingungsdämpfer 62 gedämpft werden.

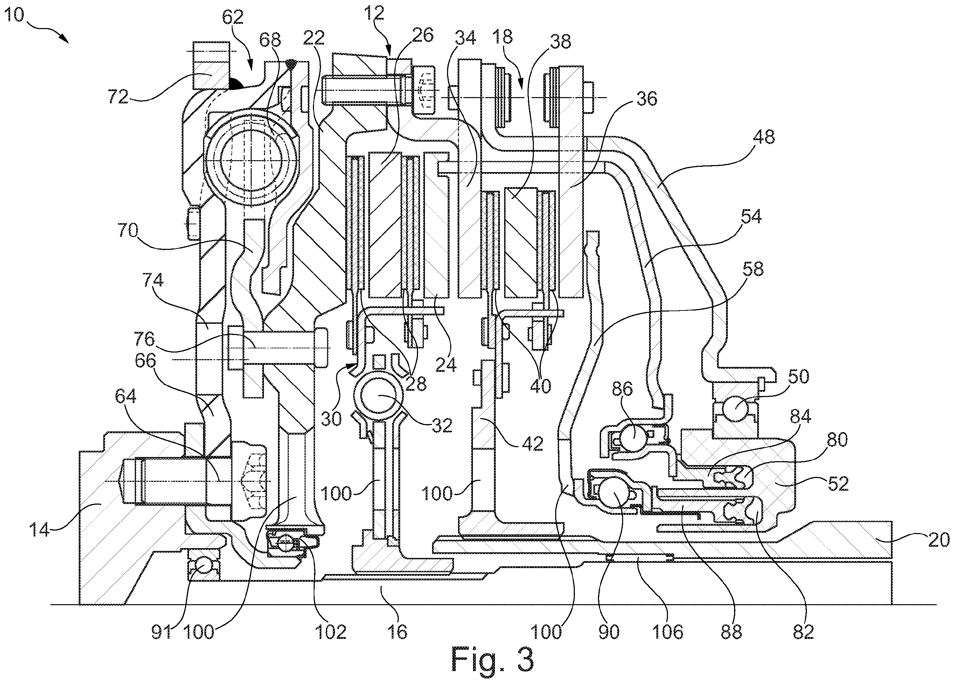

Wie in Fig. 3 dargestellt, können im Vergleich zu der in Fig. 1 oder Fig. 2 dargestellten Ausführungsform der Doppelkupplung 10 die erste Gegenplatte 22 und die zweite Gegenplatte 34 als separate in axialer Richtung zueinander beabstandete Bauteile ausgestaltet sein, so dass sich ein "sechst-Platten-Design" ergibt. Die Betätigungsrichtungen zum Schließen der ersten Teilkupplung 12 und der zweiten Teilkupplung 18 weisen die gleiche Axialrichtung auf. Bei einem Schließen der ersten Teilkupplung 12 wird der erste Betätigungstopf 54 auf Druck belastet.

Die erste Gegenplatte 22 und die zweite Gegenplatte 34 sind mit dem Kupplungsdeckel 48 verbunden, der über ein Deckellager 50 mit dem Betätigungssystem 52 verbunden ist, wodurch das Betätigungssystem 52 an dem Kupplungsdeckel 48 befestigt ist. Das Betätigungssystem 52 weist einen ersten Ringzylinder 80 und einen koaxial zum ersten Ringzylinder 80 angeordneten zweiten Ringzylinder 82 auf. Das Betätigungssystem 52 ist dadurch als CSC ("concentric slave cylinder") ausgestaltet. In diesem Ausführungsbeispiel sind die beiden Ringzylinder 80, 82 in eine gleiche Richtung angeordnet. In dem ersten Ringzylinder 80 ist ein erster Betätigungskolben 84 axial geführt, der über ein erstes Ausrücklager 86 an dem ersten Betätigungstopf 54 angreift. Dadurch kann der erste Betätigungstopf 54 von dem Betätigungssystem 52 betätigt werden. In dem zweiten Ringzylinder 82 ist ein zweiter Betätigungskolben 88 axial geführt, der über ein zweites Ausrücklager 90 an dem zweiten Betätigungstopf 58 angreift. Dadurch kann der zweite Betätigungstopf 58 von dem Betätigungssystem 52 betätigt werden. Das Betätigungssystem 52 ist als CSC ("concentric slave cylinder") ausgestaltet. Wie in Fig. 3 gezeigt ist die erste Kupplungsscheibe 30 über einen ersten Scheibendämpfer 32 drehfest mit der ersten Getriebeeingangswelle 16 verbunden. Die zweite Kupplungsscheibe 42 ist drehfest mit der zweiten Getriebeeingangswelle 20 verbunden.

In diesem Ausführungsbeispiel sind in der ersten Kupplungsscheibe 30 und in der zweiten Kupplungsscheibe 42 sowie im zweiten Betätigungstopf 58 Montageöffnungen 100 zum Hindurchführen des Verbindungsmittels 64 bei der Montage vorgesehen.

Dadurch kann der Drehschwingungsdämpfer 62 im vormontierten Zustand mit der übrigen Doppelkupplung 10 gemeinsam mit der Antriebswelle 14 verbunden werden. Ferner ist die erste Gegenplatte 22 über ein Wälzlager 102 an der Antriebswelle 14 abgestützt, über das insbesondere Radialkräfte und Axialkräfte abgetragen werden können. Ferner ist die erste Getriebeeingangswelle 16 über ein Pilotlager 91 an der Antriebswelle 14 gelagert.

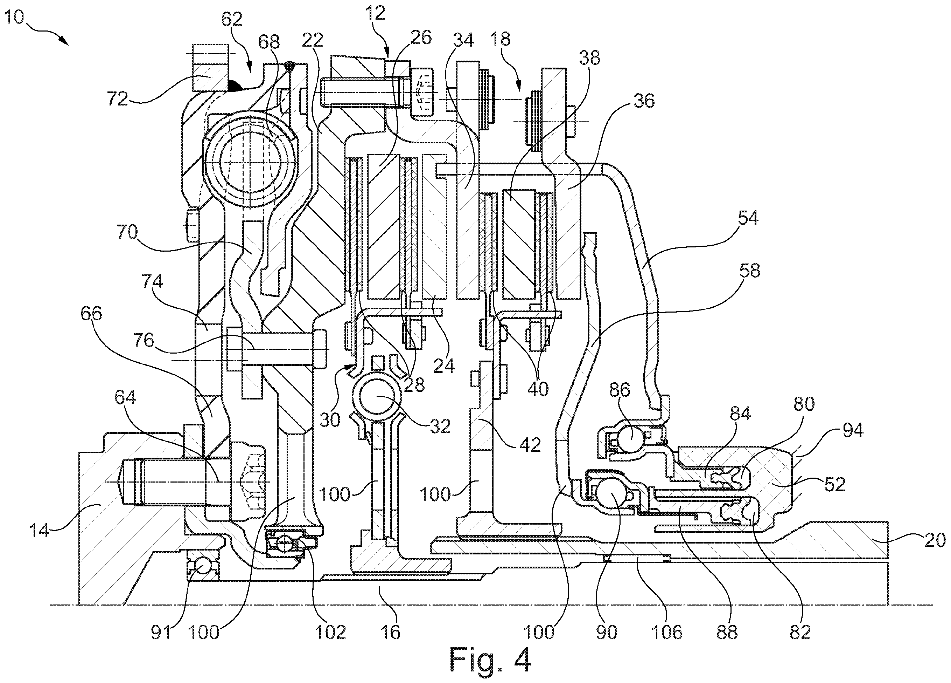

Bei der in Fig. 4 dargestellten Ausführungsform der Doppelkupplung 10 ist im Vergleich zu der in Fig. 3 dargestellten Ausführungsform der Doppelkupplung 10 der Kupplungsdeckel 48 eingespart. In diesem Ausführungsbeispiel ist das Betätigungssystem 52 direkt an dem Getriebegehäuse 94 befestigt.

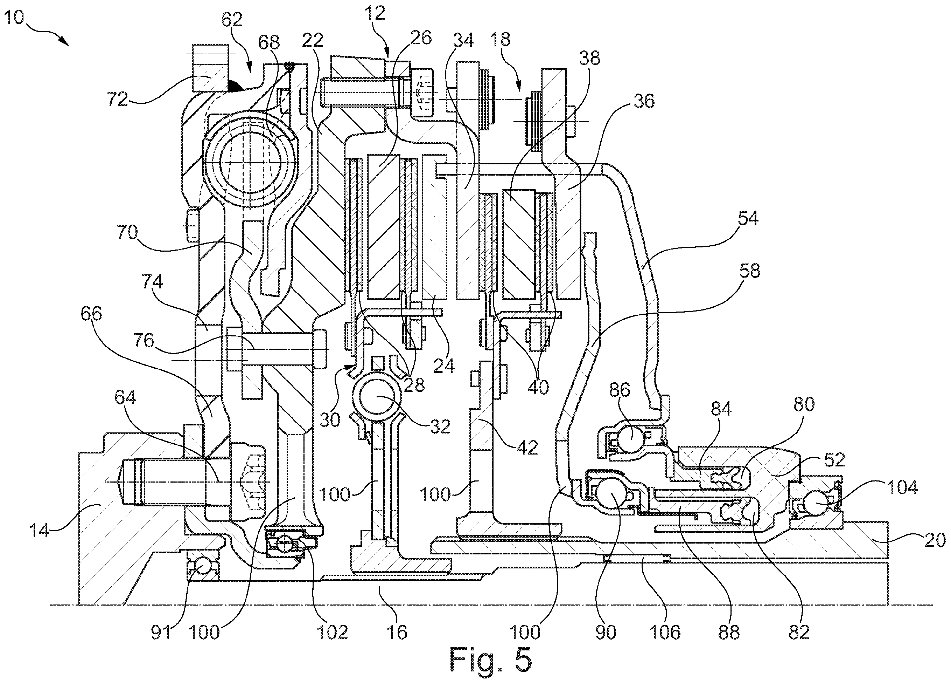

Im Vergleich zu der in Fig. 4 dargestellten Ausführungsform ist bei dem in Fig. 5 dargestellten Ausführungsbeispiel das Betätigungssystem 52 nicht mit dem Getriebegehäuse 94 verbunden, sondern über ein Lager 104 an der zweiten Getriebeeingangswelle 20 zur Abtragung von Radialkräften und/oder Axialkräften abgestützt. Ferner kann die zweite Getriebeeingangswelle 20 über ein als Nadellager ausgestaltetes Wellenlager 106 an der ersten Getriebeeingangswelle 16 gelagert sein. Ein ungewolltes Verdrehen des Betätigungssystems 52 kann durch eine Verdrehungssicherung und/oder eine Momentenabstützung verhindert werden.

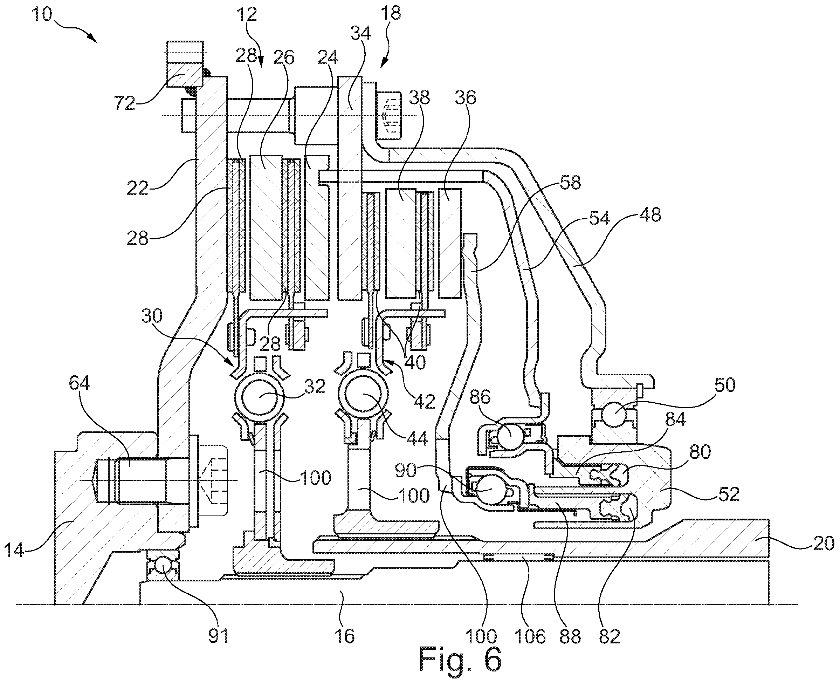

Bei der in Fig. 6 dargestellten Ausführungsform der Doppelkupplung 10 ist im Vergleich zu der in Fig. 3 dargestellten Ausführungsform der Doppelkupplung 10 der Drehschwingungsdämpfer 62 eingespart und die erste Gegenplatte 22 mit Hilfe des Verbindungsmittels 64 direkt mit der Antriebswelle 14 verbunden. In diesem Ausführungsbeispiel ist die erste Kupplungsscheibe 30 über einen ersten Scheibendämpfer 32 drehfest mit der ersten Getriebeeingangswelle 16 verbunden und die zweite Kupplungsscheibe 42 ist über einen zweiten Scheibendämpfer 44 drehfest mit der zweiten Getriebeeingangswelle 20 verbunden. Auftretende Drehungleichförmigkeiten im über die Antriebswelle 14 eingeleiteten Drehmoment werden von dem ersten Scheibendämpfer 32 der ersten Kupplungsscheibe 30 und/oder von dem zweiten Scheibendämpfer 44 der zweiten Kupplungsscheibe 42 gedämpft werden.

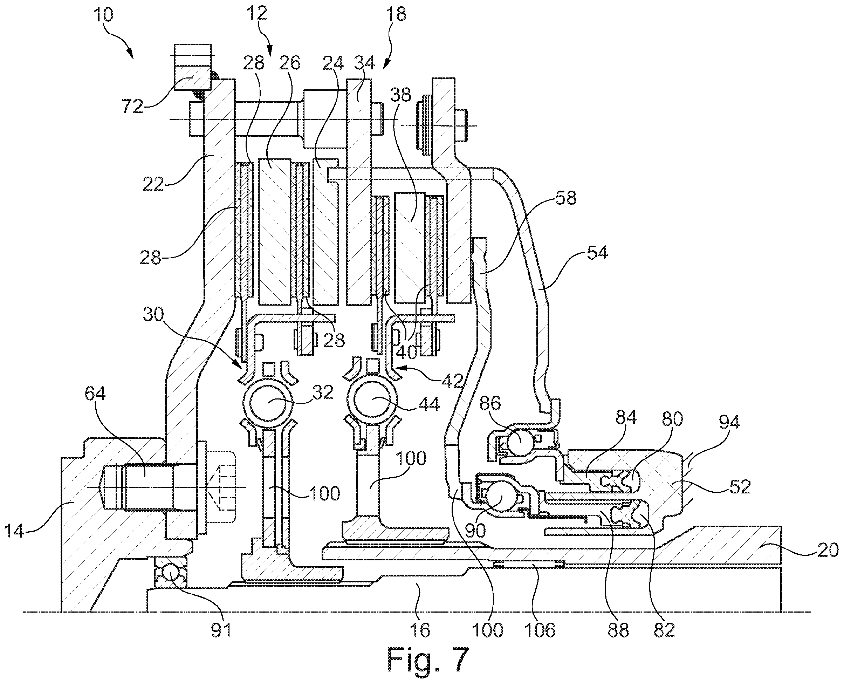

Bei der in Fig. 7 dargestellten Ausführungsform der Doppelkupplung 10 ist im Vergleich zu der in Fig. 6 dargestellten Ausführungsform der Doppelkupplung 10 der Kupplungsdeckel 48 eingespart. In diesem Ausführungsbeispiel ist das Betätigungssystem 52 direkt an dem Getriebegehäuse 94 befestigt.

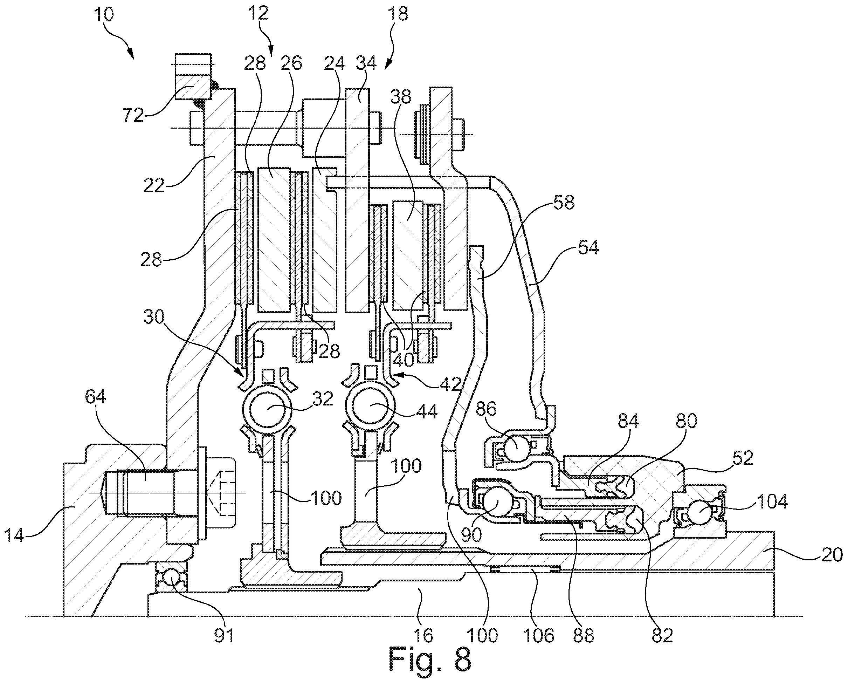

Im Vergleich zu der in Fig. 7 dargestellten Ausführungsform ist bei dem in Fig. 8 dargestellten Ausführungsbeispiel das Betätigungssystem 52 nicht mit dem Getriebegehäuse 94 verbunden, sondern über ein Lager 104 an der zweiten Getriebeeingangswelle 20 zur Abtragung von Radialkräften und/oder Axialkräften abgestützt. Ferner kann die zweite Getriebeeingangswelle 20 über ein als Nadellager ausgestaltetes Wellenlager 106 an der ersten Getriebeeingangswelle 16 gelagert sein. Ein ungewolltes Verdrehen des Betätigungssystems 52 kann durch eine Verdrehungssicherung und/oder eine Momentenabstützung verhindert werden.

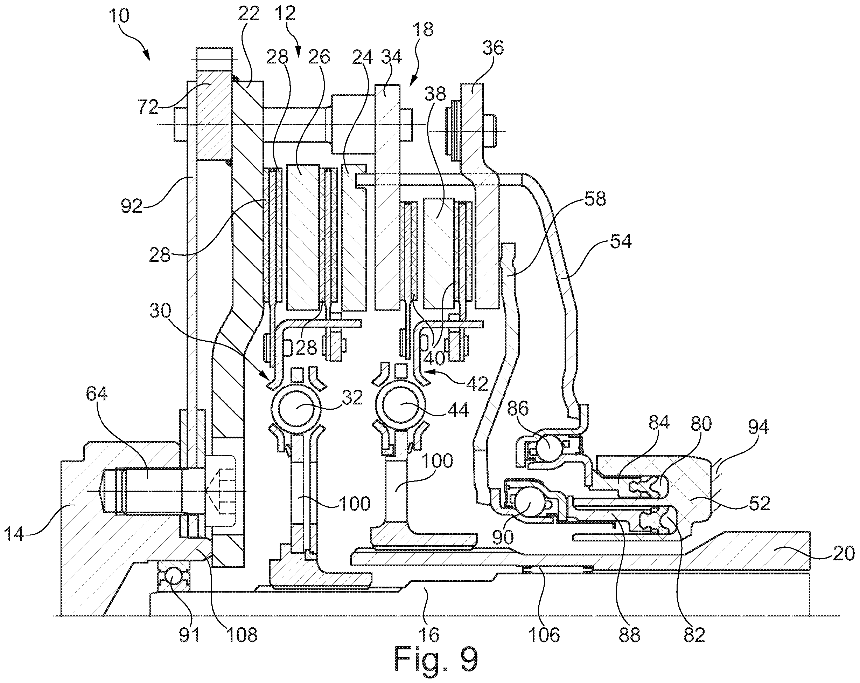

Bei der in Fig. 9 dargestellten Ausführungsform der Doppelkupplung 10 ist im Vergleich zu der in Fig. 4 dargestellten Ausführungsform der Doppelkupplung 10 der Drehschwingungsdämpfer 62 durch eine Flexplate 92 ersetzt, wobei Drehschwingungen durch den ersten Scheibendämpfer 32 und/oder den zweiten Scheibendämpfer 44 gedämpft werden können. Die Flexplate 92 ist über den Starterkranz 72 mit der ersten Gegenplatte 22 verbunden. Radial innerhalb zur Flexplate 92 steht ein von der Antriebswelle 14 ausgebildeter Stützanschlag 108 in axialer Richtung ab. Bei einer Betätigung der Doppelkupplung 10 mit Hilfe des Betätigungssystems 52 kann die erste Gegenplatte 22 gegen den Stützanschlag 108 gedrückt werden, so dass die Betätigungskräfte über die Antriebswelle 14 abgetragen werden können. Durch die Flexibilität der Flexplate 92 in axialer Richtung kann die erste Gegenplatte 22 bei Axialschwingungen und/oder Taumelbewegungen der Antriebswelle 14 von dem Stützanschlag 108 abheben und/oder auf dem Stützanschlag 108 verkippen, um die Axialschwingungen und/oder Taumelbewegungen ausgleichen und/oder dämpfen zu können. Bei der dargestellten Ausführungsform ist innerhalb des Stützanschlags ein Pilotlager 91 für die Getriebeeingangswelle 16 vorgesehen. Wenn das Pilotlager 91 entfällt oder das Pilotlager 91 zwischen der ersten Gegenplatte 22 und der ersten Getriebeeingangswelle 16 angeordnet wird, kann der Stützanschlag 108 noch weiter nach radial innen verlegt werden. Die Anschlagsfläche des Stützlagers kann auch direkt im Zentrum der Antriebswelle 14 auf der Rotationsachse angeordnet werden. Die Anschlagsfläche kann als Kalotte oder Kugelzone ausgeführt werden um ein leichtes Verkippen zu ermöglichen.

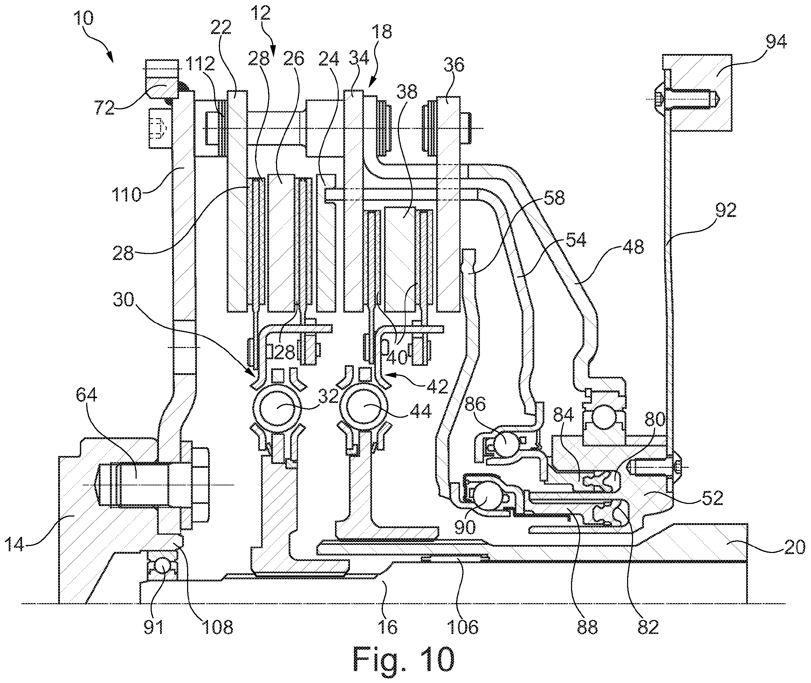

Bei der in Fig. 10 dargestellten Ausführungsform der Doppelkupplung 10 ist im Vergleich zu der in Fig. 3 dargestellten Ausführungsform der Doppelkupplung 10 der Drehschwingungsdämpfer 62 entfallen, wobei Drehschwingungen durch den ersten Scheibendämpfer 32 und/oder den zweiten Scheibendämpfer 44 gedämpft werden können. Mit der Antriebswelle 14 ist eine beispielsweise als Driveplate ausgestaltete Schwungscheibe 110 verbunden, mit der auch der Starterkranz 72 verbunden ist. Die Schwungscheibe 110 ist über im Wesentlichen tangential verlaufende Blattfedern 112 mit der ersten Gegenplatte 22 verbunden. Mit Hilfe der Blattfedern 112 kann die Doppelkupplung 10 an der Antriebswelle 14 radial zentriert werden. Die Blattfedern 112 können eine axiale Flexibilität in der Art einer Flexplate bereitstellen, um Axialschwingungen und/oder Taumelbewegungen der Antriebswelle 14 ausgleichen und/oder dämpfen zu können. In diesem Ausführungsbeispiel ist das Betätigungssystem 52 nicht nur über ein Deckellager 50 mit dem Kupplungsdeckel 48 verbünden, sondern auch über eine Flexplate 92 an einem Getriebegehäuse 94 befestigt.

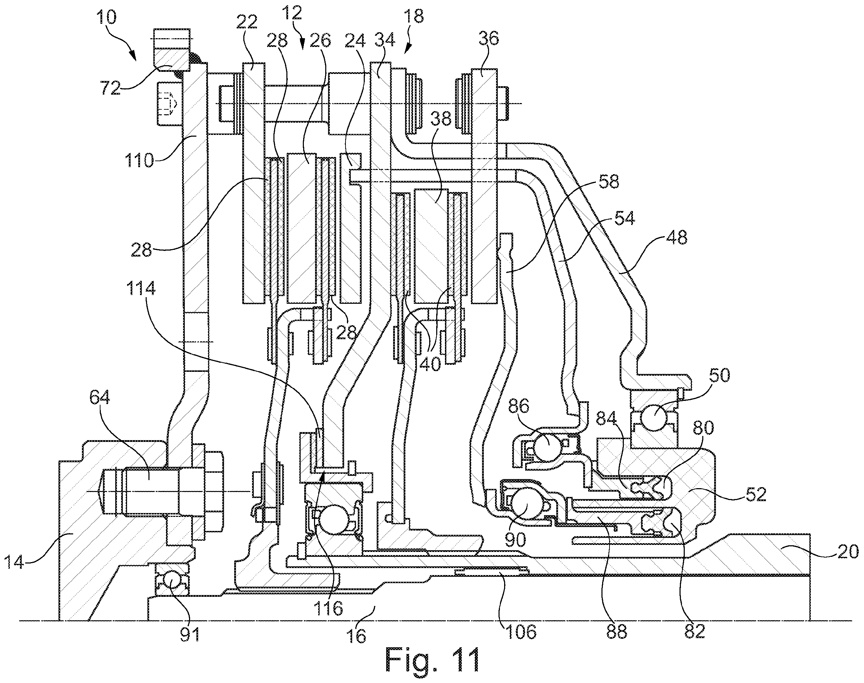

Bei dem in Fig. 11 dargestellten Ausführungsbeispiel ist mit der Antriebswelle 14 eine beispielsweise als Driveplate ausgestaltete Schwungscheibe 110 verbunden, mit der auch der Starterkranz 72 verbunden ist. Die Schwungscheibe 110 ist über im Wesentlichen tangential verlaufende Blattfedern 112 mit der ersten Gegenplatte 22 verbunden. Alternativ können die Driveplate und die Blattfedern 112 durch eine Flexplate ersetzt werden. Mit Hilfe der Blattfedern 112 kann die Doppelkupplung 10 an der Antriebswelle 14 radial zentriert werden. Die Blattfedern 112 können eine axiale Flexibilität in der Art einer Flexplate bereitstellen, um Axialschwingungen und/oder Taumelbewegungen der Antriebswelle 14 ausgleichen und/oder dämpfen zu können. Gleichzeitig ist die zweite Gegenplatte 34 über ein Axialgleitlager 114 mit dem Stützlager 78 gekoppelt, um einen radial wirkenden Gleitversatzausgleich 116 auszubilden. Das Axialgleitlager 114 wird axial durch die Kräfte der vorgespannten Blattfedern 112 belastet. In diesem Ausführungsbeispiel ist das Betätigungssystem 52 über ein Deckellager 50 mit dem Kupplungsdeckel 48 verbunden.

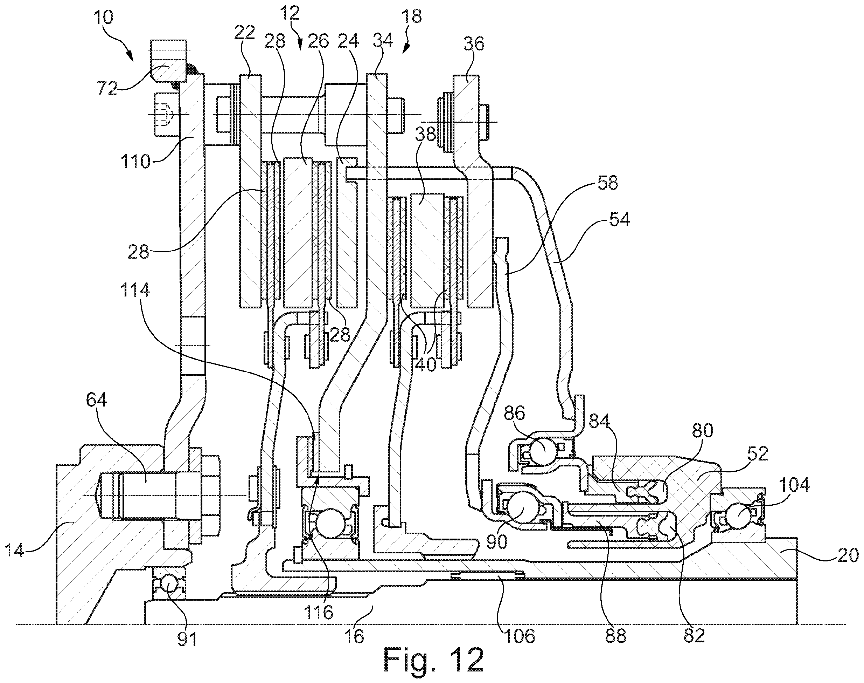

Bei der in Fig. 12 dargestellten Ausführungsform der Doppelkupplung 10 ist im Vergleich zu der in Fig. 11 dargestellten Ausführungsform der Doppelkupplung 10 der Kupplungsdeckel 48 eingespart. Das Betätigungssystem 52 ist in diesem Ausführungsbeispiel über ein Lager 104 an der zweiten Getriebeeingangswelle 20 zur Abtragung von Radialkräften und/oder Axialkräften abgestützt. Ferner kann die zweite Getriebeeingangswelle 20 über ein als Nadellager ausgestaltetes Wellenlager 106 an der ersten Getriebeeingangswelle 16 gelagert sein. Ein ungewolltes Verdrehen des Betätigungssystems 52 kann durch eine Verdrehungssicherung und/oder eine Momentenabstützung verhindert werden. Wie in Fig. 12 gezeigt, ist die zweite Gegenplatte 34 über ein Axialgleitlager 114 mit dem Stützlager 78 gekoppelt, um einen radial wirkenden Gleitversatzausgleich 116 auszubilden. Bei einer Betätigung der Doppelkupplung 10 mit Hilfe des Betätigungssystems 52 kann die zweite Gegenplatte 34 gegen das Axialgleitlager 114 gedrückt werden, so dass die Betätigungskräfte über das Stützlager 78 an die zweite Getriebeeingangswelle 20 abgetragen werden können.

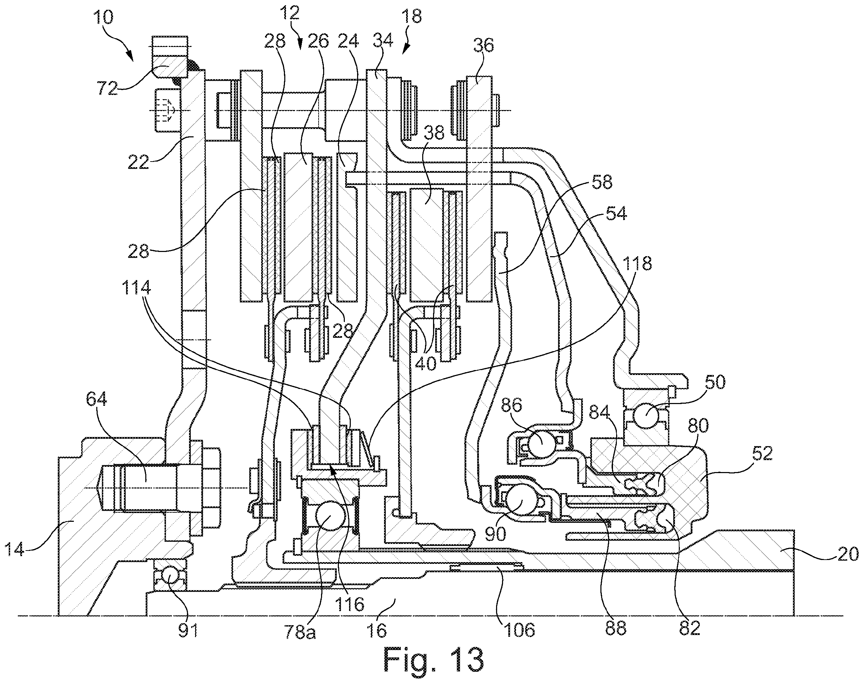

Bei der in Fig. 13 dargestellten Ausführungsform der Doppelkupplung 10 ist im Vergleich zu der in Fig. 11 dargestellten Ausführungsform der Doppelkupplung 10 die zweite Gegenplatte 34 über zwei Axialgleitlager 114 mit dem Stützlager 78 gekoppelt, um einen radial wirkenden Gleitversatzausgleich 116 auszubilden. Wie in Fig. 13 gezeigt, ist auf beiden Seiten der zweiten Gegenplatte 34 jeweils ein Axialgleitlager 114 angeordnet. In diesem Ausführungsbeispiel ist der radial wirkende Gleitversatzausgleich 116 durch eine Feder 118 vorgespannt. Es ist möglich, dass der Gleitversatzausgleich 116 durch die doppelte Axiallageranordnung Axialkräfte in beide Richtungen übertagen kann. In diesem Fall kann auf eine gezielte Verspannung der Blattfeder 112 oder der alternativ eingesetzten Flexplate 92 verzichtet werden, selbst wenn das Betätigungssystem 52 am Kupplungsdeckel 48 abgestützt wird. Dazu ist es jedoch erforderlich, dass außer dem Gleitversatzausgleich 116 auch die Verbindung zwischen dem Gleitversatzausgleich 116 und dem Stützlager 78, die Verbindung zwischen dem Stützlager 78 und der Getriebeeingangswelle 16, 20 und das Stützlager 78 selber Axialkräfte in beide Richtungen übertagen können. Dazu sind insbesondere Rillenkugellager 78a gut geeignet.

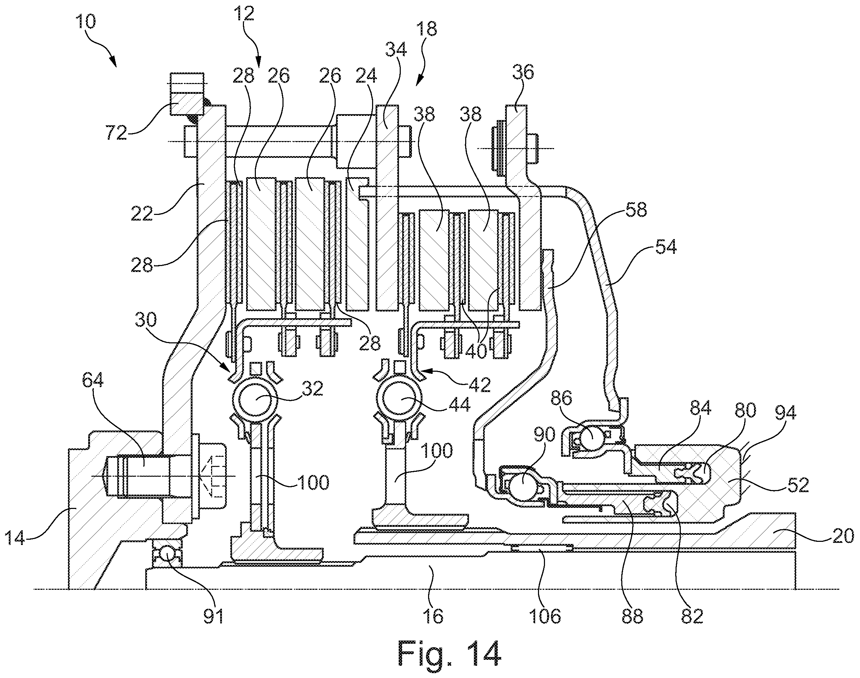

Bei der in Fig. 14 dargestellten Ausführungsform der Doppelkupplung 10 sind im Vergleich zu der in Fig. 9 dargestellten Ausführungsform der Doppelkupplung 10 zwei erste Zwischenplatten 26 und zwei zweite Zwischenplatten 38 vorgesehen, so dass entsprechend mehr erste Reibbeläge 28 und zweite Reibbeläge 40 verpresst werden können. Die wirksame Reibfläche und die Anzahl der Reibflächen kann dadurch weiter erhöht werden.

### Bezugszeichenliste

- 10: Doppelkupplung
- 12: erste Teilkupplung
- 14: Antriebswelle
- 16: erste Getriebeeingangswelle
- 18: zweite Teilkupplung
- 20: zweite Getriebeeingangswelle
- 22: erste Gegenplatte
- 24: erste Anpressplatte
- 26: erste Zwischenplatte
- 28: erster Reibbelag
- 30: erste Kupplungsscheibe
- 32: erster Scheibendämpfer
- 34: zweite Gegenplatte
- 36: zweite Anpressplatte
- 38: zweite Zwischenplatte
- 40: zweiter Reibbelag
- 42: zweite Kupplungsscheibe
- 44: zweiter Scheibendämpfer
- 46: Zentralplatte
- 48: Kupplungsdeckel
- 50: Deckellager
- 52: Betätigungssystem
- 54: erster Betätigungstopf
- 56: Zugelement
- 58: zweiter Betätigungstopf
- 60: Mitnehmerring
- 62: Drehschwingungsdämpfer
- 64: Verbindungsmittel
- 66: Primärmasse
- 68: Energiespeicherelement
- 70: Sekundärmasse
- 72: Starterkranz
- 74: Zugangsöffnung
- 76: Befestigungsmittel
- 78: Stützlager
- 78a: Rillenkugellager
- 80: erster Ringzylinder
- 82: zweiter Ringzylinder
- 84: erster Betätigungskolben
- 86: erstes Ausrücklager
- 88: zweiter Betätigungskolben
- 90: zweites Ausrücklager
- 91: Pilotlager
- 92: Flexplate
- 94: Getriebegehäuse
- 96: Gleitlager
- 98: Distanzstück
- 100: Montageöffnung
- 102: Wälzlager
- 104: Lager
- 106: Wellenlager
- 108: Stützanschlag
- 110: Schwungscheibe
- 112: Blattfeder
- 114: Axialgleitlager
- 116: Gleitversatzausgleich
- 118: Feder

## Patentansprüche

1. Doppelkupplung zum Kuppeln einer Antriebswelle (14) eines Kraftfahrzeugmotors mit einer ersten Getriebeeingangswelle (16) und/oder einer zweiten Getriebeeingangswelle (20) eines Kraftfahrzeuggetriebes, mit
einer ersten Teilkupplung (12) zum Kuppeln der Antriebswelle (14) mit der ersten Getriebeeingangswelle (16), wobei die erste Teilkupplung (12) eine erste Gegenplatte (22), mindestens eine relativ zur ersten Gegenplatte (22) axial verlagerbare erste Zwischenplatte (26) und eine relativ zur ersten Gegenplatte (22) und zur ersten Zwischenplatte (26) axial verlagerbare erste Anpressplatte (24) zum Verpressen von ersten Reibbelägen (28) einer ersten Kupplungsscheibe (30) zwischen der ersten Gegenplatte (22) und der ersten Zwischenplatte (26) sowie zwischen der ersten Zwischenplatte (26) und der ersten Anpressplatte (24) aufweist,
einer zweiten Teilkupplung (18) zum Kuppeln der Antriebswelle (14) mit der zweiten Getriebeeingangswelle (20), wobei die zweite Teilkupplung (18) eine zweite Gegenplatte (34), mindestens eine relativ zur zweiten Gegenplatte (34) axial verlagerbare zweite Zwischenplatte (38) und eine relativ zur zweiten Gegenplatte (34) und zur zweiten Zwischenplatte (38) axial verlagerbare zweite Anpressplatte (36) zum Verpressen von zweiten Reibbelägen (40) einer zweiten Kupplungsscheibe (42) zwischen der zweiten Gegenplatte (34) und der zweiten Zwischenplatte (38) sowie zwischen der zweiten Zwischenplatte (38) und der zweiten Anpressplatte (36) aufweist,
einem ersten Betätigungstopf (54) zum übersetzungslosen Verlagern der ersten Anpressplatte (24) und
einem zweiten starr ausgebildeten Betätigungstopf (58) zum übersetzunglosen Verlagern der zweiten Anpressplatte (36), **dadurch gekennzeichnet, dass** die erste Gegenplatte (22) und/oder die zweite Gegenplatte (34) über ein Stützlager (78) zur Abtragung von Radialkräften und/oder Axialkräften an der ersten Getriebeeingangswelle (16) und/oder der zweiten Getriebeeingangswelle (20) abgestützt ist..

2. Doppelkupplung nach Anspruch 1 **dadurch gekennzeichnet, dass** die drehfest mit der ersten Getriebeeingangswelle (16) verbindbare erste Kupplungsscheibe (30) vorgesehen ist, wobei die erste Kupplungsscheibe (30) einen für den ersten Reibbelag (28) zwischen der ersten Gegenplatte (22) und der ersten Zwischenplatte (26) sowie für den ersten Reibbelag (28) zwischen der ersten Zwischenplatte (26) und der ersten Anpressplatte (24) gemeinsamen, insbesondere als Scheibendämpfer ausgestalteten, ersten Drehschwingungsdämpfer (32) aufweist, und/oder die drehfest mit der zweiten Getriebeeingangswelle (20) verbindbare zweite Kupplungsscheibe (42) vorgesehen ist, wobei die zweite Kupplungsscheibe (42) einen für den zweiten Reibbelag (40) zwischen der zweiten Gegenplatte (34) und der zweiten Zwischenplatte (38) sowie für den zweiten Reibbelag (40) zwischen der zweiten Zwischenplatte (38) und der zweiten Anpressplatte (36) gemeinsamen, insbesondere als Scheibendämpfer ausgestalteten, zweiten Drehschwingungsdämpfer (44) aufweist.

3. Doppelkupplung nach Anspruch 1 oder 2 **dadurch gekennzeichnet, dass** ein mit der ersten Gegenplatte (22) und der zweiten Gegenplatte (34) drehfest verbundener Kupplungsdeckel (48) zum Abdecken zumindest eines Teils der ersten Teilkupplung (12) und/oder der zweiten Teilkupplung (18) vorgesehen ist, wobei der Kupplungsdeckel (48) an einer Befestigungsstelle mit der ersten Gegenplatte (22) und/oder mit der zweiten Gegenplatte (34) befestigt ist.

4. Doppelkupplung nach einem der Ansprüche 1 bis 3 **dadurch gekennzeichnet, dass** ein, insbesondere hydraulisches, mechanisches und/oder elektromechanisches, Betätigungssystem (52) zur Aufbringung einer an dem ersten Betätigungstopf (54) und/oder an dem zweiten Betätigungstopf (58) angreifenden Betätigungskraft vorgesehen ist, wobei das Betätigungssystem (52) an mindestens einem Kupplungs- oder Getriebeteil , insbesondere an der ersten Getriebeeingangswelle (16),an der zweiten Getriebeeingangswelle (20), an einem Getriebegehäuse (94) und/oder an dem Kupplungsdeckel (48), zur Abtragung von Lasten gelagert ist.

5. Doppelkupplung nach einem der Ansprüche 1 bis 4 **dadurch gekennzeichnet, dass** ein Federelement, insbesondere eine in axialer Richtung flexible Flexplate (92) oder Blattfedern, zur drehfesten Befestigung mit der Antriebswelle (14) vorgesehen ist, wobei die Flexplate (92) mit der ersten Gegenplatte (22) und/oder mit der zweiten Gegenplatte (34) zur Einleitung eines von der Antriebswelle (14) bereitgestellten Drehmoments verbunden ist.

6. Doppelkupplung nach einem der Ansprüche 1 bis 5 **dadurch gekennzeichnet, dass** ein Stützanschlag (108) zur Abstützung von in axialer Richtung wirkenden Betätigungskräften in die Antriebswelle (14) vorgesehen ist, wobei insbesondere die erste Gegenplatte (22) relativ zur Antriebswelle (14) axial bewegbar und/oder kippbar ist und der Stützanschlag (108) durch die Antriebswelle (14) und/oder durch die erste Gegenplatte (22) und/oder ein mit der Antriebswelle (14) oder mit der ersten Gegenplatte (22) verbundenes Bauteil ausgebildet ist.

7. Doppelkupplung nach einem der Ansprüche 1 bis 6 **dadurch gekennzeichnet, dass** die erste Gegenplatte (22) und die zweite Gegenplatte (34) durch eine gemeinsame Zentralplatte (46) ausgebildet sind.

8. Doppelkupplung nach Anspruch 1, **dadurch gekennzeichnet, dass** die erste Gegenplatte (22) und/oder die zweite Gegenplatte (34) über einen radial wirkenden Gleitversatzausgleich (130) an dem Stützlager (78) angebunden ist.

9. Doppelkupplung nach einem der Ansprüche 1 bis 8 **dadurch gekennzeichnet, dass** ein mit der ersten Gegenplatte (22) und/oder der zweiten Gegenplatte (34) verbundener, insbesondere als Zweimassenschwungrad ausgestalteter, Drehschwingungsdämpfer (62) zur Dämpfung von über die Antriebswelle (14) eingeleitete Drehschwingungen vorgesehen ist, wobei der Drehschwingungsdämpfer (62) mindestens eine Zugangsöffnung (74) zum Hindurchführen eines den Drehschwingungsdämpfer (62) mit der ersten Gegenplatte (22) und/oder mit der zweiten Gegenplatte (34) verbindenden Befestigungsmittels (76) aufweist und/oder die erste Gegenplatte (22) und/oder die zweite Gegenplatte (34) eine Montageöffnung (100) zum Hindurchführen eines den Drehschwingungsdämpfer (62) mit der Antriebswelle (14) verbindenden Verbindungsmittels (64) aufweist und/oder die erste Kupplungsscheibe (30) und/oder die zweite Kupplungsscheibe (42) und/oder der erste Betätigungstopf (54) und/oder der zweite Betätigungstopf (58) eine Montageöffnung (100) zum Hindurchführen eines den Drehschwingungsdämpfer (62) mit der Antriebswelle (14) verbindenden Verbindungsmittels (64) aufweist.

10. Doppelkupplung nach einem der Ansprüche 1 bis 9 **dadurch gekennzeichnet, dass** die erste Gegenplatte (22) zur Abtragung von Radialkräften und/oder Axialkräften an der Antriebswelle (14) und/oder einem mit der Antriebswelle (14) verbundenen, insbesondere als Zweimassenschwungrad ausgestalteten, Drehschwingungsdämpfer (62) zur Dämpfung von über die Antriebswelle (14) eingeleitete Drehschwingungen abgestützt ist.

## Claims

1. Double clutch for coupling a drive shaft (14) of a motor vehicle engine to a first transmission input shaft (16) and/or a second transmission input shaft (20) of a motor vehicle transmission, having
a first component clutch (12) for coupling the drive shaft (14) to the first transmission input shaft (16), the first component clutch (12) having a first counter-plate (22), at least one first intermediate plate (26) which can be moved axially relative to the first counter-plate (22), and a first pressure plate (24) which can be moved axially relative to the first counter-plate (22) and to the first intermediate plate (26) for pressing first friction linings (28) of a first clutch disc (30) between the first counter-plate (22) and the first intermediate plate (26) and between the first intermediate plate (26) and the first pressure plate (24),
a second component clutch (18) for coupling the drive shaft (14) to the second transmission input shaft (20), the second component clutch (18) having a second counter-plate (34), at least one second intermediate plate (38) which can be moved axially relative to the second counter-plate (34), and a second pressure plate (36) which can be moved axially relative to the second counter-plate (34) and to the second intermediate plate (38) for pressing second friction linings (40) of a second clutch disc (42) between the second counter-plate (34) and the second intermediate plate (38) and between the second intermediate plate (38) and the second pressure plate (36),
a first actuating pot (54) for moving the first pressure plate (24) without a transmission ratio, and
a second actuating pot (58) of rigid configuration for moving the second pressure plate (36) without a transmission ratio, **characterized in that** the first counter-plate (22) and/or the second counter-plate (34) are/is supported on the first transmission input shaft (16) and/or the second transmission input shaft (20) via a supporting bearing (78), in order to absorb radial forces and/or axial forces.

2. Double clutch according to Claim 1, **characterized in that** the first clutch disc (30) which can be connected fixedly to the first transmission input shaft (16) so as to rotate with it is provided, the first clutch disc (30) having a common first torsional vibration damper (32) which is configured, in particular, as a disc-type damper for the first friction lining (28) between the first counter-plate (22) and the first intermediate plate (26) and for the first friction lining (28) between the first intermediate plate (26) and the first pressure plate (24), and/or the second clutch disc (42) which can be connected fixedly to the second transmission input shaft (20) so as to rotate with it is provided, the second clutch disc (42) having a common second torsional vibration damper (44) which is configured, in particular, as a disc-type damper for the second friction lining (40) between the second counter-plate (34) and the second intermediate plate (38) and for the second friction lining (40) between the second intermediate plate (38) and the second pressure plate (36).

3. Double clutch according to Claim 1 or 2, **characterized in that** a clutch cover (48) which is connected fixedly to the first counter-plate (22) and the second counter-plate (34) so as to rotate with them is provided for covering at least one part of the first component clutch (12) and/or the second component clutch (18), the clutch cover (48) being fastened at a fastening point to the first counter-plate (22) and/or to the second counter-plate (34).

4. Double clutch according to one of Claims 1 to 3, **characterized in that** an, in particular hydraulic, mechanical and/or electromechanical, actuating system (52) is provided for applying an actuating force which acts on the first actuating pot (54) and/or on the second actuating pot (58), the actuating system (52) being mounted on at least one clutch part or transmission part, in particular on the first transmission input shaft (16), on the second transmission input shaft (20), on a transmission housing (94) and/or on the clutch cover (48), in order to absorb loads.

5. Double clutch according to one of Claims 1 to 4, **characterized in that** a spring element, in particular a flexplate (92) which is flexible in the axial direction or leaf springs, is provided for fastening fixedly to the drive shaft (14) so as to rotate with it, the flexplate (92) being connected to the first counter-plate (22) and/or to the second counter-plate (34) in order to introduce a torque which is provided by the drive shaft (14) .

6. Double clutch according to one of Claims 1 to 5, **characterized in that** a supporting stop (108) is provided for supporting actuating forces which act in the axial direction in the drive shaft (14), it being possible, in particular, for the first counter-plate (22) to be moved axially and/or tilted relative to the drive shaft (14), and the supporting stop (108) being configured by way of the drive shaft (14) and/or by way of the first counter-plate (22) and/or a component which is connected to the drive shaft (14) or to the first counter-plate (22).

7. Double clutch according to one of Claims 1 to 6, **characterized in that** the first counter-plate (22) and the second counter-plate (34) are configured by way of a common central plate (46).

8. Double clutch according to Claim 1, **characterized in that** the first counter-plate (22) and/or the second counter-plate (34) are/is attached to the supporting bearing (78) via a radially acting sliding offset compensation means (130).

9. Double clutch according to one of Claims 1 to 8, **characterized in that** a torsional vibration damper (62) which is connected to the first counter-plate (22) and/or the second counter-plate (34) and is configured, in particular, as a dual mass flywheel is provided for damping torsional vibrations which are introduced via the drive shaft (14), the torsional vibration damper (62) having at least one access opening (74) for guiding through a fastening means (76) which connects the torsional vibration damper (62) to the first counter-plate (22) and/or to the second counter-plate (34), and/or the first counter-plate (22) and/or the second counter-plate (34) having an assembly opening (100) for guiding through a connecting means (64) which connects the torsional vibration damper (62) to the drive shaft (14), and/or the first clutch disc (30) and/or the second clutch disc (42) and/or the first actuating pot (54) and/or the second actuating pot (58) having an assembly opening (100) for guiding through a connecting means (64) which connects the torsional vibration damper (62) to the drive shaft (14).

10. Double clutch according to one of Claims 1 to 9, **characterized in that**, in order to absorb radial forces and/or axial forces, the first counter-plate (22) is supported on the drive shaft (14) and/or a torsional vibration damper (62) which is connected to the drive shaft (14) and is configured, in particular, as a dual mass flywheel, in order to damp torsional vibrations which are introduced via the drive shaft (14).

## Revendications

1. Double embrayage pour l'accouplement d'un arbre d'entraînement (14) d'un moteur de véhicule automobile comprenant un premier arbre d'entrée de transmission (16) et/ou un deuxième arbre d'entrée de transmission (20) d'une transmission de véhicule automobile, comprenant
un premier embrayage partiel (12) pour l'accouplement de l'arbre d'entraînement (14) au premier arbre d'entrée de transmission (16), le premier embrayage partiel (12) présentant une première plaque conjuguée (22), au moins une première plaque intermédiaire (26) pouvant être déplacée axialement par rapport à la première plaque conjuguée (22) et une première plaque de pressage (24) pouvant être déplacée axialement par rapport à la première plaque conjuguée (22) et par rapport à la première plaque intermédiaire (26) pour le pressage de premières garnitures de friction (28) d'un premier disque d'embrayage (30) entre la première plaque conjuguée (22) et la première plaque intermédiaire (26) ainsi qu'entre la première plaque intermédiaire (26) et la première plaque de pressage (24),
un deuxième embrayage partiel (18) pour l'accouplement de l'arbre d'entraînement (14) au deuxième arbre d'entrée de transmission (20), le deuxième embrayage partiel (18) présentant une deuxième plaque conjuguée (34), au moins une deuxième plaque intermédiaire (38) pouvant être déplacée axialement par rapport à la deuxième plaque conjuguée (34) et une deuxième plaque de pressage (36) pouvant être déplacée axialement par rapport à la deuxième plaque conjuguée (34) et par rapport à la deuxième plaque intermédiaire (38) pour le pressage de deuxièmes garnitures de friction (40) d'un deuxième disque d'embrayage (42) entre la deuxième plaque conjuguée (34) et la deuxième plaque intermédiaire (38) ainsi qu'entre la deuxième plaque intermédiaire (38) et la deuxième plaque de pressage (36),
un premier pot d'actionnement (54) pour le déplacement sans démultiplication de la première plaque de pressage (24) et
un deuxième pot d'actionnement (58) réalisé sous forme rigide pour le déplacement sans démultiplication de la deuxième plaque de pressage (36), **caractérisé en ce que** la première plaque conjuguée (22) et/ou la deuxième plaque conjuguée (34) sont supportées par le biais d'un palier de support (78) de manière à évacuer les forces radiales et/ou les forces axiales au niveau du premier arbre d'entrée de transmission (16) et/ou du deuxième arbre d'entrée de transmission (20).

2. Double embrayage selon la revendication 1, **caractérisé en ce qu'**il est prévu le premier disque d'embrayage (30) pouvant être connecté de manière solidaire en rotation au premier arbre d'entrée de transmission (16), le premier disque d'embrayage (30) présentant un premier amortisseur d'oscillations de torsion (32) commun à la première garniture de friction (28) entre la première plaque conjuguée (22) et la première plaque intermédiaire (26) et à la première garniture de friction (28) entre la première plaque intermédiaire (26) et la première plaque de pressage (24), en particulier réalisé sous forme d'amortisseur à disque, et/ou **en ce qu'**il est prévu le deuxième disque d'embrayage (42) pouvant être raccordé au deuxième arbre d'entrée de boîte de vitesses (20), le deuxième disque d'embrayage (42) présentant un deuxième amortisseur d'oscillations de torsion (44) commun à la deuxième garniture de friction (40) entre la deuxième plaque conjuguée (34) et la deuxième plaque intermédiaire (38) et à la deuxième garniture de friction (40) entre la deuxième plaque intermédiaire (38) et la deuxième plaque de pressage (36), en particulier réalisé sous forme d'amortisseur à disque.

3. Double embrayage selon la revendication 1 ou 2, **caractérisé en ce qu'**il est prévu un couvercle d'embrayage (48) raccordé à la première plaque conjuguée (22) et à la deuxième plaque conjuguée (34) de manière solidaire en rotation pour recouvrir au moins une partie du premier embrayage partiel (12) et/ou du deuxième embrayage partiel (18), le couvercle d'embrayage (48) étant fixé au niveau d'une zone de fixation à la première plaque conjuguée (22) et/ou à la deuxième plaque conjuguée (34).

4. Double embrayage selon l'une quelconque des revendications 1 à 3, **caractérisé en ce qu'**un système d'actionnement (52), en particulier hydraulique, mécanique et/ou électromécanique est prévu pour appliquer une force d'actionnement agissant sur le premier pot d'actionnement (54) et/ou sur le deuxième pot d'actionnement (58), le système d'actionnement (52) étant supporté sur au moins une partie d'embrayage ou une partie de transmission, en particulier sur le premier arbre d'entrée de transmission (16), sur le deuxième arbre d'entrée de transmission (20), sur un boîtier de transmission (94) et/ou sur le couvercle d'embrayage (48), pour l'évacuation des charges.

5. Double embrayage selon l'une quelconque des revendications 1 à 4, **caractérisé en ce qu'**un élément de ressort, en particulier une plaque de flexion (92) pouvant fléchir dans la direction axiale, ou des ressorts à lame, sont prévus pour la fixation solidaire en rotation à l'arbre d'entraînement (14), la plaque de flexion (92) étant raccordée à la première plaque conjuguée (22) et/ou à la deuxième plaque conjuguée (34) pour introduire un couple fourni par l'arbre d'entraînement (14).

6. Double embrayage selon l'une quelconque des revendications 1 à 5, **caractérisé en ce qu'**une butée de support (108) pour le support de forces d'actionnement agissant dans la direction axiale est prévue dans l'arbre d'entraînement (14), en particulier la première plaque conjuguée (22) pouvant être déplacée et/ou basculée axialement par rapport à l'arbre d'entraînement (14) et la butée de support (108) étant réalisée par l'arbre d'entraînement (14) et/ou par la première plaque conjuguée (22) et/ou par un composant raccordé à l'arbre d'entraînement (14) ou à la première plaque conjuguée (22).

7. Double embrayage selon l'une quelconque des revendications 1 à 6, **caractérisé en ce que** la première plaque conjuguée (22) et la deuxième plaque conjuguée (34) sont réalisées par une plaque centrale commune (46).

8. Double embrayage selon la revendication 1, **caractérisé en ce que** la première plaque conjuguée (22) et/ou la deuxième plaque conjuguée (34) sont reliées au palier de support (78) par le biais d'une correction de décalage dû au glissement (130) agissant radialement.

9. Double embrayage selon l'une quelconque des revendications 1 à 8, **caractérisé en ce qu'**il est prévu un amortisseur d'oscillations de torsion (62) pour l'amortissement des oscillations de torsion introduites par le biais de l'arbre d'entraînement (14), raccordé à la première plaque conjuguée (22) et/ou à la deuxième plaque conjuguée (34), en particulier réalisé sous forme de volant d'inertie à deux masses, l'amortisseur d'oscillations de torsion (62) présentant au moins une ouverture d'accès (74) pour le passage d'un moyen de fixation (76) reliant l'amortisseur d'oscillations de torsion (62) à la première plaque conjuguée (22) et à la deuxième plaque conjuguée (34) et/ou la première plaque conjuguée (22) et/ou la deuxième plaque conjuguée (34) présentant une ouverture de montage (100) pour le passage d'un moyen de connexion (64) reliant l'amortisseur d'oscillations de torsion (62) à l'arbre d'entraînement (14) et/ou le premier disque d'embrayage (30) et/ou le deuxième disque d'embrayage (42) et/ou le premier pot d'actionnement (54) et/ou le deuxième pot d'actionnement (58) présentant une ouverture de montage (100) pour le passage d'un moyen de connexion (64) reliant l'amortisseur d'oscillations de torsion (62) à l'arbre d'entraînement (14).

10. Double embrayage selon l'une quelconque des revendications 1 à 9, **caractérisé en ce que** la première plaque conjuguée (22) est supportée pour l'évacuation des forces radiales et/ou des forces axiales au niveau de l'arbre d'entraînement (14) et/ou au niveau d'un amortisseur d'oscillations de torsion (62) connecté à l'arbre d'entraînement (14), en particulier réalisé sous forme de volant d'inertie à deux masses, pour l'amortissement des oscillations de torsion introduites par le biais de l'arbre d'entraînement (14).
